# EUROPEAN PATENT APPLICATION

(11) **EP 3 395 908 A1**
(43) Date of publication of application: **31.10.2018**
(21) Application number: 16878187.0
(22) Date of filing: 10.11.2016
(51) Int. Cl.: C08L 101/02, C08K 3/02, C09D 5/02, C09D 7/12, C09D 201/06, C09D 201/08, G03B 21/62

(54) **AQUEOUS DISPERSION, COATING SOLUTION, AND METHOD FOR PRODUCING TRANSMISSION-TYPE SCREEN**

(30) Priority: 24.12.2015 JP 2015251285
(71) Applicant: Nicca Chemical Co., Ltd., Fukui-shi, Fukui 910-8670 (JP)
(72) Inventor: AIHEMAITI Xiaokaiti, Fukui-shi Fukui 910-8670 (JP); SAITO Hazime, Fukui-shi Fukui 910-8670 (JP); FUJIMURA Tadamasa, Tokyo 104-0031 (JP); SHIOZAKI Shigeru, Tokyo 104-0031 (JP)
(74) Representative: Boult Wade Tennant LLP
(86) International application number: PCT/JP2016/083411
(87) International publication number: WO 2017/110289

(57) **Abstract**

Provided is an aqueous dispersion including fine particles having a refractive index of 2.0 or higher and an anionic polymer, the aqueous dispersion having a median diameter of 0.01 µm to 1.0 µm as measured by a dynamic light scattering method.

## Description

### Technical Field

The present invention relates to an aqueous dispersion, a coating solution, and a method for producing a transmission type screen.

### Background Art

In recent years, in the field of construction, attention has been focused on transmission-type screens that can project and display information such as commercial advertisements while retaining light transmissibility. Transmission type screens are used in, for example, show windows of commercial buildings, signboards, and the like. Furthermore, transmission type screens are also attracting attention in the field of automobiles, in addition to the field of construction. For example, active research has been underway in recent years on the utilization of transmission type screens as head-up displays (HUD) that project positional information or the like on the windscreens of automobiles.

Regarding the transmission type screens, a reinforced glass type screen in which a hologram is encapsulated between two sheets of glass plates; a film type screen in which a resin film containing high-refractive index fine particles is attached to the surface of a transparent base material; a panel type in which high-refractive index fine particles have been kneaded into a transparent base material; a coating film type in which a light scattering film has been formed by applying a dispersion liquid obtained by dispersing high-refractive index fine particles in a transparent dispersing medium, on the surface of a transparent base material such as a glass plate; and the like are known. Among them, in particular, improvement of a transmission type screen of coating film type having high transparency is desired.

By the way, many of those transmission type screens used for show windows, signboards, and the like are seen not only from the front but also from an oblique direction. Therefore, it is required that the external appearance of the screen face is not cloudy, the screen face has satisfactory light scattering properties, and the image on the screen face can be clearly seen even from an oblique angle.

From such a viewpoint, in the field of transmission type screens of coating film type, development of a dispersion liquid that shows excellent dispersion stability of high-refractive index fine particles is underway.

For example, Patent Literature 1 discloses a liquid composition including diamond fine particles and a binder, the liquid composition having improved dispersibility of the diamond fine particles in water and solvents by performing surface modification of nanodiamond particles by subjecting nanodiamond particles to an oxidation treatment in a supercritical fluid formed from water and/or an alcohol.

Patent Literature 2 discloses a "nanodiamond composite" formed by coating (surface modification) nanodiamond particles with polyvinyl alcohol (PVA) and further dispersing these coated particles in a cycloolefin polymer (COP). It is described in Patent Literature 2 that a resin sheet containing the "nanodiamond composite" has high transparency and adequate light scattering properties, and therefore, an excellent transparent light diffuser is obtained by disposing the sheet on a glass substrate.

### Citation List

### Patent Literature

Patent Literature 1: Japanese Unexamined Patent Publication No. 2011-022261
Patent Literature 2: Japanese Unexamined Patent Publication No. 2013-164569

### Summary of Invention

### Technical Problem

However, since complicated processes such as surface modification of diamond fine particles are implemented in the methods described in Patent Literature 1 and Patent Literature 2, it is desired to develop a more convenient method for producing a transmission type screen.

Furthermore, since it is assumed that people walking on the street or automobile drivers touch the surface of transmission type screens, it is desirable that coating film type screens of coating film type have durability that are tolerant of practical use such that the coating film on the surface is not peeled off.

The present invention was achieved in view of such circumstances as described above, and it is an object of the invention to provide a coating solution that enables the formation of a light scattering film which is well-balanced between high transparent visibility and excellent light scattering reflectivity and has excellent durability, a method for producing a transmission type screen using the coating solution, and an aqueous dispersion that enables easy preparation of the above-described coating solution.

### Solution to Problem

The aqueous dispersion according to the present invention includes fine particles having a refractive index of 2.0 or higher and an anionic polymer, in which the median diameter determined according to a dynamic light scattering method is 0.01 µm to 1.0 µm. When the aqueous dispersion according to the present invention is used, a coating solution in which the high-refractive index fine particles are satisfactorily dispersed can be easily produced. When the coating solution is used, a light scattering film that is well-balanced between high transparent visibility and excellent light scattering reflectivity and has excellent durability such as adhesiveness to a base material and water resistance, can be formed.

In regard to the aqueous dispersion according to the present invention, it is preferable that the fine particles contain at least one component selected from the group consisting of diamond, a diamond derivative, barium titanate, zirconium oxide, and titanium oxide. In this case, it becomes easy to enhance the transparent visibility of the film formed from a coating solution produced by using the aqueous dispersion.

In regard to the aqueous dispersion according to the present invention, it is preferable that the anionic polymer has at least one anionic group selected from the group consisting of a carboxy group, a carboxylate group, a sulfo group, and a sulfonate group. In this case, the dispersion stability of the high-refractive index fine particles tends to be further enhanced. By using such an aqueous dispersion, a coating solution in which the high-refractive index fine particles are more satisfactorily dispersed can be produced easily. When the coating solution is used, a light scattering film having superior water resistance and moisture resistance can be formed.

In regard to the aqueous dispersion according to the present invention, it is preferable that the anionic polymer includes at least one resin selected from the group consisting of a polyurethane resin, an acrylic resin, and an acrylic urethane resin, all of which are water-soluble or water-dispersible. In this case, the adhesiveness of a film formed from a coating solution produced by using the aqueous dispersion to a base material can be increased.

In regard to the aqueous dispersion according to the present invention, it is preferable that the polyurethane resin and the acrylic urethane resin have at least one structural unit derived from a polyol component selected from the group consisting of a polyester polyol and a polycarbonate polyol. In this case, a coating solution that can form a light scattering film having superior light resistance and superior adhesiveness to a base material can be easily produced.

The coating solution according to the present invention includes fine particles having a refractive index of 2.0 or higher and an anionic polymer, and the median diameter determined according to a dynamic light scattering method is 0.01 to 1.0 µm.

In regard to the coating solution according to the present invention, it is preferable that the fine particles contain at least one component selected from the group consisting of diamond, a diamond derivative, barium titanate, zirconium oxide, and titanium oxide.

In regard to the coating solution according to the present invention, it is preferable that the anionic polymer has at least one anionic group selected from the group consisting of a carboxy group, a carboxylate group, a sulfo group, and a sulfonate group.

In regard to the coating solution according to the present invention, it is preferable that the anionic polymer includes at least one resin selected from the group consisting of a polyurethane resin, an acrylic resin, and an acrylic urethane resin, all of which are water-soluble or water-dispersible.

In regard to the coating solution according to the present invention, it is preferable that the polyurethane resin and the acrylic urethane resin have at least one structural unit derived from a polyol component selected from the group consisting of a polyester polyol and a polycarbonate polyol.

It is preferable that the coating solution according to the present invention is used for a transmission type screen.

The method for producing a transmission type screen according to the present invention includes a step of applying the coating solution according to the present invention on a substrate. A transmission type screen produced by the production method according to the present invention has excellent durability and also can have satisfactory light scattering reflectivity without impairing transparent visibility. The transmission type screen obtainable by the method of the present invention is suitable as a transmission type screen for show windows and as a screen for head-up displays, which are put in a severe environment such as outdoors.

In regard to the method for producing a transmission type screen according to the present invention, it is desirable that the transmission type screen is used for a head-up display.

### Advantageous Effects of Invention

According to the present invention, a coating solution that enables the formation of a light scattering film which is well-balance between high transparent visibility and excellent light scattering reflectivity and has excellent durability, a method for producing a transmission type screen using the coating solution, and an aqueous dispersion that enables easy production of the coating solution, can be provided.

### Brief Description of Drawings

FIG. 1 is a schematic cross-sectional view illustrating an embodiment of the transmission type screen according to the present invention.
FIG. 2 is a schematic diagram for explaining the direction of light scattering when light is incident to the transmission type screen according to the Examples.

### Description of Embodiments

Hereinafter, suitable embodiments of the present invention will be described in detail. Meanwhile, according to the present specification, the term "structural units derived from A and B" means "a structural unit derived from A and a structural unit derived from B".

### [1-1] Aqueous dispersion

The aqueous dispersion according to the present embodiment includes fine particles having a refractive index of 2.0 or higher and an anionic polymer.

The median diameter of the aqueous dispersion determined according to a dynamic scattering method is preferably 0.01 to 1.0 µm. When the median diameter is 0.01 µm or more, the light scattering reflectivity of the film formed from a coating solution produced by using the aqueous dispersion can be easily enhanced. Furthermore, when the median diameter is 1.0 µm or less, the dispersion stability of the aqueous dispersion and the transparent visibility of the film formed from a coating solution produced by using the aqueous dispersion can be easily enhanced. From such a viewpoint, the median diameter is preferably 0.05 to 0.7 µm. Meanwhile, the median diameter is a value obtained by measuring the fine particles dispersed in the aqueous dispersion using ZETASIZER NANO ZS (manufactured by Malvern Instruments, Ltd.) at a measurement temperature of 25°C.

### <Fine particles>

According to the present specification, the fine particles may include primary particles of the fine particles as well as secondary particles such as aggregates of the primary particles.

Regarding the refractive index of the fine particles included in the light scattering film, it is preferable that the fine particles have a higher refractive index than the refractive indices of the materials that constitute the film other than the fine particles. Generally, since the refractive index of the anionic polymer is about 1.5 to 1.6, the refractive index of the fine particles according to the present embodiment may be 2.0 or higher, and is preferably 2.3 or higher. From the viewpoint of easy availability, the refractive index of the fine particles may be 3.0 or lower. According to the present specification, such fine particles having a refractive index of 2.0 or higher are defined as "high-refractive index fine particles". The refractive index of the fine particles is measured by the method described in the Examples.

It is desirable that the high-refractive index fine particles are fine particles containing at least one component selected from the group consisting of, for example, diamond (refractive index 2.4), a diamond derivative, barium titanate (refractive index 2.4), zirconium oxide (refractive index 2.4), and titanium oxide (refractive index 2.7). In a case in which the high-refractive index fine particles contain these components, it becomes easy to enhance the transparent visibility of the film formed from a coating solution produced by using the aqueous dispersion. From the viewpoint that the compatibility with the anionic polymer is enhanced, it is preferable that the high-refractive index fine particles contain diamond. Examples of the diamond derivative include fluorinated diamond and siliconized diamond.

The high-refractive index fine particles may contain one kind of component alone, or may contain two or more kinds of components.

The high-refractive index fine particles may be, for example, aggregates of fine particles containing diamond (diamond aggregates).

The diamond aggregates are preferably aggregates of fine particles containing nanodiamond particles, which are obtained by a detonation method. The aggregates of fine particles containing nanodiamond particles, which are obtained by a detonation method, may be unpurified aggregates (unpurified product), or may be purified aggregates (purified product). In regard to the unpurified product, the fine particles containing nanodiamond particles have a core-shell structure in which the surface of nanodiamond particles is covered with graphite-based carbon, and thus the fine particles are colored black. The purified product is obtained by oxidatively treating fine particles containing nanodiamond particles in the unpurified product, and removing a phase formed from graphite-based hydrocarbons (graphite phase). Depending on the applications, an unpurified product is desirable; however, from the viewpoint of obtaining a less colored light scattering film, a purified product is preferable.

The average particle size of the high-refractive index fine particles is preferably 0.01 µm to 10 µm. When the average particle size is 10 µm or less, caking of the high-refractive index fine particles does not easily occur, and the high-refractive index fine particles tend to be easily dispersed uniformly. When the average particle size of the fine particle is 0.01 µm or more, the light scattering reflectivity of the film formed from a coating solution produced by using the aqueous dispersion can be easily enhanced. Meanwhile, caking refers to a phenomenon in which fine particles settle down over time and deposit to be hardened.

According to the present invention, the average particle size of the high-refractive index fine particles described above can be determined by an observation by transmission electron microscopy (TEM), an observation by scanning electron microscopy (SEM), or the like. Specifically, for any arbitrary 50 or more high-refractive index fine particles in an observation photograph, the particle sizes (diameters) of the various particles are measured, and the average particle size is determined by determining the arithmetic mean of those particle sizes. Meanwhile, in the observation photograph, in a case in which the shape of a high-refractive index fine particle is not a true circular shape, the diameter of the largest circumscribed circle of a cross-section of the particle is measured as the particle size (diameter).

The content of the high-refractive index fine particles is preferably 1 to 50 parts by mass, and more preferably 5 to 25 parts by mass, with respect to 100 parts by mass of the anionic polymer. When the content of the high-refractive index fine particles is within the range described above, the dispersion stability of the high-refractive index fine particles is enhanced, and the adhesiveness of the film formed from a coating solution produced by using the aqueous dispersion to a base material may become sufficient.

### <Anionic polymer>

The anionic polymer according to the present specification means a polymer having an anionic functional group (anionic group). It is preferable that the anionic polymer has at least one anionic group selected from the group consisting of a carboxy group, a carboxylate group, a sulfo group, and a sulfonate group, from the viewpoint of having excellent dispersion stability of the high-refractive index fine particles. Among these, an anionic polymer having a carboxy group and/or a carboxylate group, or an anionic polymer having a sulfo group and/or a sulfonate group is more preferred. The anionic polymer may be a polymer having one kind of anionic group alone, or may be a polymer having two or more kinds of anionic groups.

The content of the anionic group in the anionic polymer is preferably 0.1% to 5.0% by mass, and more preferably 0.2% to 2.5% by mass, based on the total mass of the anionic polymer. When the content of the anionic group is within the range described above, an aqueous dispersion having superior dispersion stability of the high-refractive index fine particles can be easily obtained, and the water resistance and moisture resistance of the light scattering film (transparent thin film layer) in the transmission type screen that will be described below can be further enhanced.

When the anionic polymer has a carboxy group and/or a carboxylate group, the total content of the carboxy group and the carboxylate group is preferably 0.5% to 4.0% by mass, and more preferably 0.7% to 2.5% by mass, based on the total mass of the anionic polymer, from the viewpoint of the same reasons as the reasons for the content of the anionic group.

When the anionic polymer has a sulfo group and/or a sulfonate group, the total content of the sulfo group and the sulfonate group is preferably 0.1% to 1.0% by mass, and more preferably 0.2% to 1.0% by mass, based on the total mass of the anionic polymer, from the viewpoint of the same reasons as the reasons for the content of the anionic group.

When the anionic polymer has a carboxy group and/or a carboxylate group, and a sulfo group and/or a sulfonate group, the total content of the carboxy group and the carboxylate group is preferably 0.1% to 4.0% by mass based on the total mass of the anionic polymer, and the total content of the sulfo group and the sulfonate group is preferably 0.1% to 1.0% by mass based on the total mass of the anionic polymer, from the viewpoint of the same reasons as the reasons for the content of the anionic group.

The anionic polymer is preferably an aqueous resin such as a water-soluble resin or a water-dispersible resin. Here, the term water-dispersible means that the anionic polymer is of self-emulsifying type. When the anionic polymer is a water-dispersible resin, it is preferable that the median diameter of the water-dispersible resin determined according to a dynamic light scattering method is 0.05 to 0.2 µm. In this case, sufficient dispersion stability of the high-refractive index fine particles can be obtained, and the water resistance and moisture resistance of the light scattering film (transparent thin film layer) in the transmission type screen that will be described below can be further enhanced.

It is preferable that the anionic polymer includes at least one resin selected from the group consisting of a polyurethane resin, an acrylic resin, an acrylic urethane resin, an acrylic silicone resin, and a polyester resin, all of which are water-soluble or water-dispersible, and it is more preferable that the anionic polymer includes at least one resin selected from the group consisting of a polyurethane resin, an acrylic resin, and an acrylic urethane resin, all of which are water-soluble or water-dispersible, from the viewpoint of enhancing the adhesiveness of the film formed from a coating solution produced by using an aqueous dispersion to the base material. Regarding the anionic polymer, one kind of these resins may be used alone, or two or more kinds of these resins may be used in combination.

When the anionic polymer includes at least one resin selected from the group consisting of a polyurethane resin and an acrylic urethane resin, which are both water-soluble or water-dispersible, the resin may have (a) a structural unit derived from an organic polyisocyanate (hereinafter, referred to as "component (a)") and (b) a structural unit derived from a polyol (hereinafter, referred to as "component (b)"). That is, the anionic polymer may be a condensation reaction product obtainable by causing component (a) and component (b) to react.

The component (a) is not particularly limited and may be an aliphatic polyisocyanate, an alicyclic polyisocyanate, or an aromatic polyisocyanate, each having two or more isocyanate groups. Examples of such an organic polyisocyanate include aliphatic diisocyanate compounds such as hexamethylene diisocyanate, 1,5-pentamethylene diisocyanate, and trimethylhexamethylene diisocyanate; alicyclic diisocyanate compounds such as isophorone diisocyanate, hydrogenated xylylene diisocyanate, dicyclohexylmethane diisocyanate, norbornane diisocyanate, and 1,3-bis(isocyanatomethyl)cyclohexane; and aromatic diisocyanate compounds such as tolylene diisocyanate, diphenylmethane diisocyanate, naphthalene diisocyanate, tolidine diisocyanate, xylylene diisocyanate, and tetramethylxylylene diisocyanate.

It is preferable, from the viewpoint of imparting non-yellowing properties to the light scattering film (for example, the transparent thin film layer that will be described below), that the component (a) has a structural unit derived from an aliphatic diisocyanate compound or an alicyclic diisocyanate compound. Regarding the aliphatic diisocyanate compound, hexamethylene diisocyanate can be suitably used. Regarding the alicyclic diisocyanate compound, isophorone diisocyanate, dicyclohexylmethane diisocyanate, norbornane diisocyanate, and 1,3-bis(isocyanatomethyl)cyclohexane can be suitably used.

The polyurethane resin and the acrylic urethane resin may have one kind of the structural unit derived from the component (a) alone, or may have two or more kinds of such structural units.

The component (b) may be ay compound having two or more hydroxy groups. Examples of the component (b) include a polyester polyol, a polycarbonate polyol, an acrylic polyol, a polyether polyol, a polyether ester polyol having an ether bond and an ester bond; a silicone polyol, and a fluoropolyol. Among these, from the viewpoint of obtaining a light scattering film (for example, the transparent thin film layer that will be described below) having superior light resistance and superior adhesiveness to a base material, a polyester polyol and a polycarbonate polyol are preferred, and from the viewpoint of obtaining a light scattering film having superior moisture resistance and water resistance, a polycarbonate polyol is more preferred.

Examples of the polyester polyol include polyethylene adipate diol, polybutylene adipate diol, polyethylene butylene adipate diol, polyhexamethylene isophthalate adipate diol, polyethylene succinate diol, polybutylene succinate diol, polyethylene sebacate diol, polybutylene sebacate diol, poly-e-caprolactone diol, poly(3-methyl-1,5-pentylene) adipate diol, a polycondensation product of 1,6-hexanediol and a dimer acid, a co-polycondensation product of 1,6-hexanediol with adipic acid and a dimer acid, a polycondensation product of nonanediol and a dimer acid, and a co-polycondensation product of ethylene glycol with adipic acid and a dimer acid.

A polycarbonate polyol is a polyol having a carbonate bond in the molecule and having two or more hydroxy groups, and a polycarbonate polyol can be obtained by, for example, reacting a polyol with an organic carbonate compound or phosgene. Examples of the polyol include 1,3-propanediol, 1,4-butanediol, 1,5-pentanediol, 1,6-hexanediol, 3-methyl-1,5-pentanediol, neopentyl glycol, 1,4-cyclohexanedimethanol, 1,10-decanediol, and isosorbide. A polycarbonate polyol may have one kind or two or more kinds of structural units derived from the polyols described above. Examples of the organic carbonate compound or phosgene include diphenyl carbonate.

A polyurethane resin and an acrylic urethane resin may have one kind of a structural unit derived from the component (b) alone, or may have two or more kinds of such structural units.

The weight average molecular weight of the component (b) is preferably 500 to 5,000, and more preferably 1,000 to 3,000. The weight average molecular weight can be obtained by measuring the hydroxy value according to a terminal group quantity specification method.

Among the anionic polymers, a water-soluble polyurethane resin or a water-dispersible polyurethane resin, both having an anionic group in the resin skeleton (hereinafter, referred to as "aqueous polyurethane resin"), is suitable.

### (Aqueous polyurethane resin)

Regarding the aqueous polyurethane resin, (I) a polyurethane resin having a carboxy group and/or a carboxylate group (hereinafter, referred to as "polyurethane resin A"), and (II) a polyurethane resin having a sulfo group and/or a sulfonate group (hereinafter, referred to as "polyurethane resin B") can be suitably used.

### [Polyurethane resin A]

Regarding the polyurethane resin A, for example, a polyurethane resin having a structural unit derived from the component (a) described above, a structural unit derived from the component (b) described above, a structural unit derived from (c) a compound having a carboxy group and two or more active hydrogen groups (hereinafter, referred to as "component (c)"), and a structural unit derived from (d) a polyamine compound having two or more of an amino group and/or an imino group (hereinafter, referred to as "component (d)"), is suitably used.

Examples of the component (a) and the component (b) include compounds similar to the examples of the component (a) and the component (b) mentioned above. The polyurethane resin A may have one kind of the structural unit derived from the component (a) alone, or may have two or more kinds of such structural units. The same also applies to the component (b).

The component (c) may be any compound having a carboxy group and two or more active hydrogen groups. Examples of the active hydrogen group include a hydroxy group. Meanwhile, among the compounds of the component (b), any compound that also corresponds to the component (c) is regarded as component (c).

Examples of the component (c) include 2,2-dimethylolpropionic acid and 2,2-dimethylolbutanoic acid. The component (c) may also be a polyester polyol having a pendant type carboxy group, which is obtainable by reacting a diol having a carboxy group with an aromatic dicarboxylic acid, an aliphatic dicarboxylic acid, or the like.

The polyurethane resin A may have one kind of a structural unit derived from the component (c) alone, or may have two or more kinds of such structural units.

Examples of the component (d) include polyamine compounds containing two or more primary and/or secondary amino groups in one molecule, such as ethylenediamine, tetramethylenediamine, hexamethylenediamine, diethylenetriamine, triethylenetetramine, hydrazine, piperazine, diaminodiphenylmethane, tolylenediamine, xylylenediamine, isophoronediamine, and norboranediamine.

The polyurethane resin A may have one kind of a structural unit derived from the component (d) alone, or may have two or more kinds of such structural units.

### [Method for producing polyurethane resin A]

The polyurethane resin A can be obtained by, for example, a method including a step of causing the component (a), component (b), and component (c) to react; and a step of subjecting the resultant to a chain extension reaction using the component (d).

In the step of causing the component (a), component (b), and component (c) to react, a neutralization product of an isocyanate group-terminated prepolymer A having a carboxylate group (hereinafter, also referred to as "prepolymer A neutralization product") is obtained. The prepolymer A is a reaction product of the component (a), component (b), and component (c), and has a structural unit derived from the component (a), a structural unit derived from the component (b), and a structural unit derived from the component (c). The prepolymer A neutralization product has a carboxylate group (-COO-), which is a neutralization product of a carboxy group derived from the component (c).

Regarding the component (a), component (b), and component (c), one kind or a combination of two or more kinds of the compounds mentioned above as the component (a), component (b), and component (c), respectively, may be used.

In the step of causing the component (a), component (b), and component (c) to react, a prepolymer A may be obtained, and then the prepolymer A thus obtained may be neutralized, or a carboxy group derived from the component (c) may be neutralized simultaneously with the production of a prepolymer A. Furthermore, it is also acceptable that before the production of a prepolymer A, a carboxy group derived from the component (c) may be neutralized.

Neutralization of a carboxy group derived from the component (c) can be carried out using a known method as appropriate. The compound that is used for such neutralization is not particularly limited, and examples include amines such as trimethylamine, triethylamine, tri-n-propylamine, tributylamine, N-methyldiethanolamine, N,N-dimethylmonoethanolamine, N,N-diethylmonoethanolamine, and triethanolamine; potassium hydroxide; sodium hydroxide; and ammonia. Among these, tertiary amines such as trimethylamine, triethylamine, tri-n-propylamine, and tributylamine are preferred.

A specific method for obtaining the prepolymer A neutralization product is not particularly limited, and the prepolymer A neutralization product can be produced by, for example, a conventionally known single-stage method (so-called one-shot method), or a multi-stage isocyanate polyaddition reaction method. The reaction temperature at this time is preferably 40°C to 150°C.

In the step of performing a chain extension reaction using component (d), the prepolymer A neutralization product may be emulsified and dispersed in water, and then the prepolymer A neutralization product may be reacted with the component (d).

The method for emulsifying and dispersing the prepolymer A neutralization product in water is not particularly limited, and for example, methods using emulsifying apparatuses such as a homomixer, a homogenizer, and a DISPER may be used. Furthermore, when the prepolymer A neutralization product is emulsified and dispersed in water, it is preferable that the prepolymer A neutralization product is emulsified and dispersed in water by self-emulsification, particularly without using an emulsifying agent, from the viewpoint of suppressing a reaction between an isocyanate group and water as far as possible. In this case, for example, the prepolymer A neutralization product is emulsified and dispersed at a temperature in the range of room temperature (25°C) to 40°C.

The chain extension reaction of the prepolymer A neutralization product can be carried out by adding the component (d) to the prepolymer A neutralization product, or by adding the prepolymer A neutralization product to the component (d). It is preferable that the chain extension reaction is carried out at a reaction temperature of 20°C to 40°C. The chain extension reaction is usually completed within 30 to 120 minutes.

### [Polyurethane resin B]

Regarding the polyurethane resin B, for example, a polyurethane resin having a structural unit derived from component (a), a structural unit derived from component (b), a structural unit derived from component (d), and a structural unit derived from a polyamine compound having two or more units of an amino group and/or an imino group and having a sulfo group and/or a sulfonate group (hereinafter, referred to as "component (e)"), is suitably used.

Examples of the component (a), component (b), and component (d) include compounds similar to the examples of the component (a), component (b), and component (d) mentioned above. The polyurethane resin B may have one kind of the structural unit derived from the component (a) alone, or may have two or more kinds of such structural units. The same also applies to the component (b) and component (d).

The component (e) may be any compound having two or more units of an amino group and/or an imino group and having a sulfo group and/or a sulfonate group, and examples include sodium 2-(2-aminoethylamino)-ethanesulfonate, sodium 2-(3-aminopropylamino)ethanesulfonate, and sodium 2,4-diaminobenzenesulfonate.

The polyurethane resin B may have one kind of a structural unit derived from component (e), or may have two or more kinds of such structural units.

### [Method for producing polyurethane resin B]

The polyurethane resin B can be obtained by, for example, a method including a step of causing the component (a), component (b), and component (e) to react; and a step of subjecting the resultant to a chain extension reaction using the component (d).

In the step of causing the component (a), component (b), and component (e) to react, a neutralization product of an isocyanate group-terminated prepolymer B having a sulfonate group (hereinafter, also referred to as "prepolymer B neutralization product") is obtained. The prepolymer B is a reaction product of the component (a), component (b), and component (e), and has a structural unit derived from the component (a), a structural unit derived from the component (b), and a structural unit derived from the component (e). The prepolymer B neutralization product has a sulfonate group (-SO₃-), which is a neutralization product of a sulfo group derived from the component (e).

Regarding the component (a), component (b), and component (e), one kind or a combination of two or more kinds of the respective compounds of the component (a), component (b), and component (e) mentioned above may be used.

A specific method for obtaining the prepolymer B neutralization product is not particularly limited, and the method may be similar to the method for obtaining the prepolymer A neutralization product, except that the component (e) is used instead of the component (c).

In the step of subjecting the prepolymer B neutralization product to a chain extension reaction using the component (d), the prepolymer B neutralization product may be emulsified and dispersed in water, and then the prepolymer B neutralization product and the component (d) may be allowed to react. Thereby, the polyurethane resin B can be obtained as an emulsion dispersion liquid of the polyurethane resin B.

The details of the method for emulsifying and dispersing the prepolymer B neutralization product in water, and the method for performing a chain extension reaction using the component (d) may be similar to the details of the method for producing the polyurethane resin A, except that the prepolymer B neutralization product is used instead of the prepolymer A neutralization product.

Regarding an aqueous polyurethane resin that satisfies these requirements, EVAFANOL HA-15 (manufactured by Nicca Chemical Co., Ltd., trade name, polyether-based), EVAFANOL HA-50C (manufactured by Nicca Chemical Co., Ltd., trade name, polycarbonate-based), EVAFANOL HA-170 (manufactured by Nicca Chemical Co., Ltd., trade name, polycarbonate-based), and the like, which are aqueous dispersion liquids of aqueous polyurethane resins, are commercially available. Furthermore, regarding a water-dispersible acrylic urethane resin, NEOSTECKER 1200 (manufactured by Nicca Chemical Co., Ltd., trade name, polyester-based), which is an aqueous dispersion liquid of an acrylic urethane resin, is commercially available. Among these, polycarbonate-based and polyester-based resins can be suitably used. Meanwhile, the term polyether-based means that the resin has a structural unit derived from a polyether polyol. The same also applies to the polycarbonate-based and polyester-based resins.

Regarding a water-dispersible acrylic resin, VONCOAT HY364 (manufactured by Dainippon Ink & Chemicals, Inc., trade name), NEOCRYL XK-12 (manufactured by DSM Coating Resins, LLC., trade name), and the like, which are water-based dispersion liquids of acrylic resins, are commercially available. Regarding a water-dispersible acrylic silicone resin, KANEBINOL KD4 (manufactured by Nippon NSC, Ltd., trade name) and the like, which are water-based dispersion liquids of acrylic silicone resins, are commercially available. Regarding a water-dispersible polyester resin, VYLONAL MD1245 (manufactured by Toyobo Co., Ltd., trade name) and the like, which are water-based dispersion liquids of polyester resins, are commercially available.

The content of the anionic polymer in the aqueous dispersion is preferably 20% to 50% by mass, and more preferably 25% to 45% by mass, based on the total mass of the aqueous dispersion, from the viewpoint of dispersion stability of the aqueous dispersion.

In the aqueous dispersion, at least a portion of the anionic polymer may be emulsified and dispersed in water.

### <Water>

An aqueous dispersion includes water. The aqueous dispersion may also include a solvent other than water, to the extent that the effects of the present invention are not impaired. Examples of the solvent other than water include alcohols such as methanol, ethanol, and isopropyl alcohol; acetone, methyl ethyl ketone, ethyl acetate, petroleum ether, n-methylpyrrolidone, propylene glycol monomethyl ether acetate, ethylene glycol dimethyl ether, diethylene glycol dimethyl ether, ethylene glycol diethyl ether, and diethylene glycol diethyl ether.

The content of water is desirably 70% by mass or more, may be 80% by mass or more, or may be 100% by mass, based on the total amount of water and the solvent other than water.

The aqueous dispersion may also include other components in addition to high-refractive index fine particles, an anionic polymer, and water. Examples of the other components include an antifoaming agent, an antiseptic agent, and a thickening agent.

The aqueous dispersion according to the present embodiment can be used in a variety of coating solutions. The aqueous dispersion according to the present embodiment can be used as, for example, a mixing component for a coating solution used for forming a light scattering film. Particularly, the aqueous dispersion according to the present embodiment can be suitably used for forming a transparent thin film layer in a transmission type screen that includes the transparent thin film layer, which is a light scattering film.

### [1-2] Method for producing aqueous dispersion

The aqueous dispersion is obtained by adding high-refractive index fine particles to an anionic polymer that has been emulsified and dispersed in water, and dispersing the fine particles.

Regarding the high-refractive index fine particles, fine particles such as the diamond aggregates mentioned above can be used.

The method for emulsifying and dispersing the anionic polymer in water is not particularly limited, and for example, methods of using emulsifying apparatuses such as a homomixer, a homogenizer, and a DISPER may be used. Furthermore, the anionic polymer may also be emulsified and dispersed in water by self-emulsification, particularly without using an emulsifying agent. Furthermore, it is also acceptable that when the anionic polymer is produced, the anionic polymer that has been emulsified and dispersed in water is directly synthesized.

The high-refractive index fine particles can be dispersed using, for example, a dispersing apparatus that is conventionally used for pigment dispersion or the like. The dispersing apparatus is not particularly limited; however, examples include mixers such as a DISPER, a homomixer ("T.K. HOMODisper" of Primix Corp., or the like), and a planetary mixer; homogenizers (trade name "CLEARMIX" manufactured by M Technique Co., Ltd.; trade name "FILMIX" manufactured by Primix Corp., and the like); medium type dispersing machines such as a paint conditioner (manufactured by Red Devil, Inc.), a ball mill, a sand mill (trade name "DYNO-MILL" manufactured by Shinmaru Enterprises Corp., or the like), an attriter, a pearl mill (trade name "DCP MILL" manufactured by Eirich GmbH & Co KG, or the like), a bead mill (trade name "EASY NANO RMB" manufactured by Imex Co., Ltd., or the like), and a COBALL MILL; mediumless dispersing machines such as a wet type jet mill (trade name "GENUS PY" manufactured by Genus Co., Ltd.; trade name "STAR BURST" manufactured by Sugino Machine, Ltd.; trade name "NANOMIZER" manufactured by Nanomizer, Inc., or the like), trade name "CLEAR SS-5" manufactured by M-Technique Co., Ltd., and trade name "MICROS" manufactured by Nara Machinery Co., Ltd.; and other roll mills.

Regarding the high-refractive index fine particles, fine particles that have been adjusted in advance to a desired particle size may be used, or the particle size may be adjusted when the particles are dispersed such that a desired particle size is finally obtained. Such fine particles dispersion treatment can be carried out by, for example, using a bead mill or the like.

The time for dispersing the high-refractive index fine particles (treatment time) can be adjusted as appropriate according to the dispersing apparatus. For example, in the case of using a homomixer, the treatment time is preferably 12 to 60 minutes, from the viewpoint that the median diameter of the aqueous dispersion can be easily adjusted to the preferred range described above.

According to the present embodiment, in order to adjust the median diameter of the aqueous dispersion to the above-mentioned desired range, the aqueous dispersion obtained after production may be subjected to a dispersion treatment again.

### [2] Coating solution

The coating solution according to the present embodiment includes high-refractive index fine particles, an anionic polymer, and water. The coating solution according to the present embodiment is desirably a coating solution obtained by, for example, incorporating the aqueous dispersion described above. Furthermore, the aqueous dispersion mentioned above may also be used directly as the coating solution according to the present embodiment.

The median diameter of the coating solution according to a dynamic light scattering method is preferably 0.01 to 1 µm, more preferably 0.05 to 0.7 µm, and even more preferably 0.1 to 0.3 µm, from the viewpoint of obtaining a coating solution having excellent dispersion stability and from the viewpoint that a coating film (a film formed from the coating solution) can be easily formed uniformly. Meanwhile, the median diameter is a value measured at a measurement temperature of 25°C by using a ZETASIZER NANO ZS (manufactured by Malvern Instruments, Ltd.).

In the present embodiment, it is also acceptable that the coating solution obtained after production is subjected to a dispersion treatment such that the median diameter is adjusted to be in the range described above.

Specific examples of the high-refractive index fine particles and the anionic polymer included in the coating solution are similar to the examples of the high-refractive index fine particles and the anionic polymer included in the aqueous dispersion mentioned above, respectively.

In the present embodiment, the coating solution may include, if necessary, additives such as a leveling agent, a crosslinking agent, and a cissing preventing agent.

Examples of the leveling agent include various surfactants such as fluorine-based surfactants and acetylene glycol-based surfactants; alcohols such as methanol, ethanol, and isopropyl alcohol; and solvents such as acetone, methyl ethyl ketone, ethyl acetate, petroleum ether, n-methylpyrrolidone, propylene glycol monomethyl ether acetate, ethylene glycol dimethyl ether, diethylene glycol dimethyl ether, ethylene glycol diethyl ether, and diethylene glycol diethyl ether.

Examples of the crosslinking agent include a crosslinking agent that is reactive with a carboxy group, and a water-dispersible polyisocyanate-based crosslinking agent. Examples of the crosslinking agent that is reactive with a carboxy group include a water-based oxazoline-based crosslinking agent, a water-based polycarbodiimide-based crosslinking agent, and a water-based epoxy resin-based crosslinking agent. It is also possible to impart superior adhesiveness to a base material and superior water resistance to the coating film by adding these additives.

A coating solution including the above-described additives can be produced by, for example, mixing the additives with the aqueous dispersion according to the present embodiment, and then subjecting the mixture to a dispersion treatment using the dispersion treatment apparatus described above.

The coating solution according to the present embodiment can be used as, for example, a material for a transmission type screen. Hereinafter, the coating solution that is used as a material for a transmission type screen (coating solution for a transmission type screen) will be explained.

### <Coating solution for transmission type screen>

The median diameter according to a dynamic light scattering method of the coating solution for a transmission type screen is preferably 0.01 to 1 µm, more preferably 0.05 to 0.7 µm, and even more preferably 0.1 to 0.3 µm, from the viewpoint that the coating film (film formed from the coating solution for a transmission type screen) has excellent transparent visibility and light scattering reflectivity.

It is preferable that the high-refractive index fine particles contain diamond (refractive index 2.4), from the viewpoint of having excellent compatibility with the anionic polymer and from the viewpoint that the viewing angle of the coating film is widened, and visibility is increased.

The content of the high-refractive index fine particles in the coating solution for a transmission type screen is preferably 1 to 50 parts by mass, and more preferably 5 to 25 parts by mass, with respect to 100 parts by mass of the anionic polymer. When the content of the high-refractive index fine particles is within the range described above, sufficient dispersion stability of the high-refractive index fine particles in the coating solution can be secured, and a coating film having sufficient optical characteristics and excellent adhesiveness to a base material can be easily formed.

From the viewpoint of forming a coating film having superior adhesiveness to a base material, it is preferable that the anionic polymer has at least one anionic group selected from the group consisting of a carboxy group, a carboxylate group, a sulfo group, and a sulfonate group.

In regard to the coating solution for a transmission type screen, from the viewpoint of enhancing the adhesiveness of the coating film to a base material, it is preferable that the anionic polymer includes at least one resin selected from the group consisting of a polyurethane resin, an acrylic resin, and an acrylic urethane resin, all of which are water-soluble or water-dispersible. When the anionic polymer includes at least one resin selected from the group consisting of a polyurethane resin and an acrylic urethane resin, which are water-soluble or water-dispersible, it is preferable that the resin has at least one structural unit derived from a polyol component selected from the group consisting of a polyester polyol and a polycarbonate polyol, from the viewpoint that the coating film acquires further enhanced light resistance and adhesiveness to a base material.

It is preferable that the anionic polymer includes the polyurethane resin A and/or polyurethane resin B mentioned above. Preferred embodiments of the polyurethane resin A and polyurethane resin B are similar to the embodiments of the polyurethane resin A and polyurethane resin B for the aqueous dispersion.

The content of the anionic polymer in the coating solution for a transmission type screen is preferably 5% to 50% by mass, and more preferably 10% to 45% by mass, based on the total mass of the coating solution for a transmission type screen, from the viewpoint of the dispersion stability of the coating solution.

The coating solution for a transmission type screen may include the above-mentioned additives. In the case of producing a coating solution for a transmission type screen containing the above-mentioned additives, the median diameter can be adjusted to the preferred range of median diameter described above, by adjusting the time for performing the dispersion treatment.

When the coating solution for a transmission type screen according to the present embodiment is used, a light scattering film that is well-balanced between high transparent visibility and excellent light scattering reflectivity and has excellent durability such as adhesiveness to a base material and water resistance, can be formed. Thereby, a transmission type screen that exhibits both excellent optical characteristics and durability can be conveniently obtained. Furthermore, the coating solution for a transmission type screen according to the present embodiment can be obtained using the aqueous dispersion described above, and in this case, the coating solution can be produced more conveniently.

### [3-1] Transmission type screen

The transmission type screen according to the present embodiment includes a transparent thin film layer originating from the coating solution for a transmission type screen according to the present embodiment. That is, the transparent thin film layer is obtained by applying the coating solution for a transmission type screen on a substrate. The transparent thin film layer according to the present embodiment can function as a light scattering film.

The transmission type screen according to the present embodiment can have high transparent visibility and excellent light scattering reflectively and can also have excellent durability, by including a transparent thin film layer formed from the coating solution for a transmission type screen according to the present embodiment.

Hereinafter, the transmission type screen according to the present embodiment will be explained in detail with reference to the attached drawings. Meanwhile, the dimensional ratios used in the various drawings are not necessarily coincident with the actual dimensional ratios.

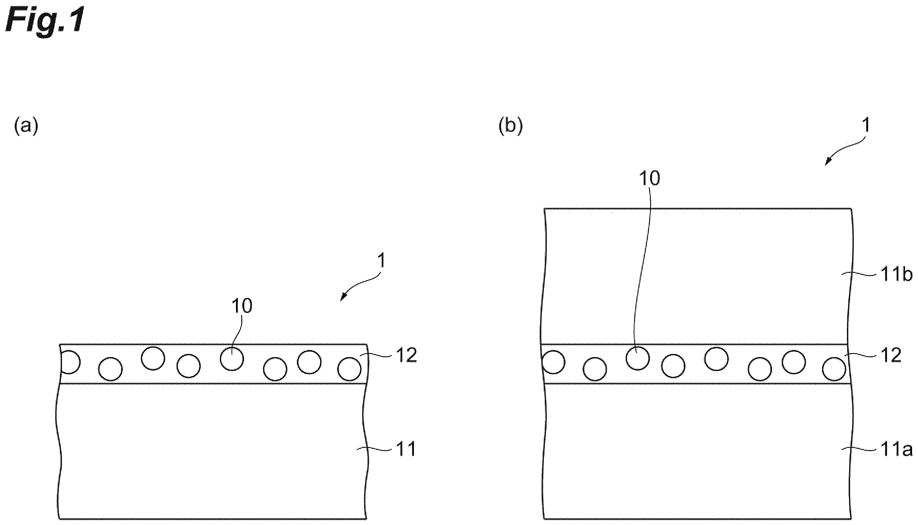

FIG. 1(a) and FIG. 1(b) are schematic cross-sectional views illustrating an embodiment of the transmission type screen according to the present embodiment. An embodiment of the transmission type screen 1 includes a substrate 11, and a transparent thin film layer 12 provided on the substrate 11. The transparent thin film layer 12 may also be provided on the principal faces on both sides of the substrate 11. Furthermore, as illustrate in FIG. 1(b), a second substrate 11b may be further provided on the transparent thin film layer 12 provided on a first substrate 11a.

It is preferable that the material that constitutes the substrate 11 (base-material) is at least one selected from the group consisting of glass and a polymer resin. Glass is not particularly limited; however, from the viewpoint of practical usability, oxide glasses such as silicate glass, phosphate glass, and borate glass may be used. Among these, silicate glass is preferred. Examples of the silicate glass include silicic acid glass, alkaline silicate glass, soda lime glass, potash lime glass, lead glass, barium glass, and borosilicate glass.

Regarding the polymer resin, a polymer resin having excellent visible light transmissibility is preferably used. Regarding the polymer resin, a thermoplastic resin, a thermosetting resin, an ionizing radiation-curable resin, and the like can be used. Examples of such a polymer resin include a polyester-based resin, an acrylic resin, an acrylic urethane-based resin, a polyester acrylate-based resin, a polyurethane acrylate-based resin, an epoxy acrylate-based resin, a urethane-based resin, an epoxy-based resin, a polycarbonate-based resin, a cellulose-based resin, an acetal-based resin, a vinyl-based resin, a polyethylene-based resin, a polystyrene-based resin, a polypropylene-based resin, a polyamide-based resin, a polyimide-based resin, a melamine-based resin, a phenolic resin, a silicone-based resin, and a fluororesin.

The transparent thin film layer 12 includes high-refractive index fine particles 10 and an anionic polymer (not shown in the diagram). Specific examples of the high-refractive index fine particles 10 and the anionic polymer are similar to the examples of the high-refractive index fine particles and the anionic polymer for the aqueous dispersion mentioned above.

The thickness of the transparent thin film layer 12 in the transmission type screen 1 is preferably 0.2 to 400 µm, more preferably 0.5 to 30 µm, even more preferably 1 to 10 µm, and particularly preferably 4 to 7 µm, from the viewpoint that sufficient transparent visibility and sufficient sharpness of a reflected image are obtained.

The transmission type screen 1 according to the present embodiment is not limited to the embodiment described above and may be, for example, a transmission type screen composed only of the transparent thin film layer 12 (transmission type sheet). In this case, examples of the substrate include substrates formed from glass, a polymer resin, a metal, and the like. These substrates may be surface-treated by a release treatment or the like.

### [3-2] Method for producing transmission type screen

An embodiment of the method for producing the transmission type screen 1 includes a step of applying the coating solution for a transmission type screen on a substrate 11. Through this step, a transparent thin film layer 12 is formed on the substrate 11.

Coating of the substrate 11 with the coating solution for a transmission type screen can be carried out by a known method. Examples of the coating method include a spray coating method, a dip coating method, a spin coating method, and a screen printing method. Furthermore, it is also acceptable that after a film including a transparent thin film layer 12 is obtained by applying the coating solution for a transmission type screen on a base material, the transparent thin film layer 12 may be formed a substrate 11 by lamination using the film.

According to the present embodiment, a dispersion treatment of the coating solution may be carried out immediately before coating in order to adjust the median diameter of the coating solution to a desired range.

The production method according to the present embodiment may also include a step of drying the coating solution for a transmission type screen after the coating solution is applied on the substrate 11.

The drying temperature may be from room temperature (25°C) to 120°C.

According to the present embodiment, the coating solution for a transmission type screen may be applied on a first substrate 11a to form a transparent thin film layer 12, and then a second substrate 11b may be laminated on the transparent thin film layer 12.

According to the present embodiment, for example, a transmission type screen composed only of a transparent thin film layer 12 (transmission type sheet) may be obtained by peeling off the transparent thin film layer 12 on the substrate 11 obtained by the method described above.

When the production method according to the present embodiment is employed, a transmission type screen 1 that is well-balanced between high transparent visibility and excellent light scattering reflectivity and exhibits excellent adhesiveness between the substrate 11 and the transparent thin film layer 12 and excellent durability of the transparent thin film layer 12 can be obtained. Particularly, in a case in which a series of processes for producing the transmission type screen 1 includes a step of producing the aqueous dispersion according to the present embodiment as described above, the transmission type screen can be obtained more conveniently.

The transmission type screen 1 according to the present embodiment is also directly applicable to a screen for head-up display, which projects positional information or the like on the windscreen of an automobile.

Thus, suitable embodiments of the present invention have been explained; however, the present invention is definitely not intended to be limited to the above-described embodiments.

### EXAMPLES

The present invention will be explained in more detail by way of Examples; however, the present invention is not intended to be limited to these.

### (Synthesis Example 1)

### [Production of diamond fine particles]

First, a black powder containing diamond (hereinafter, referred to as "BD") was synthesized. 0.65 kg of an explosive including TNT (trinitrotoluene) and RDX (cyclotrimethylenetrinitroamine) at a mass ratio of 60/40 was exploded in an explosion chamber having a size of 3 m³, Thereby, an atmosphere for storing BD was formed. Subsequently, a second explosion was caused under similar conditions, and BD was synthesized. After the explosion product expanded and reached a thermal equilibrium, a gas mixture was caused to flow out from the chamber for 35 seconds through a supersonic Laval nozzle having a cross-section of 15 mm, and BD was captured using a cyclone. Due to the heat exchange with the chamber walls and the work done by the gas (adiabatic expansion and volatilization), the cooling rate of the product was 280°C/min. The specific gravity of the BD was 2.55 g/cm³, and the median diameter (dynamic light scattering method) was 220 nm. From the specific gravity of the BD, the BD was calculated to be composed of 76% by volume of graphite-based carbon and 24% by volume of diamond.

The BD thus obtained was mixed with an aqueous solution of nitric acid at a concentration of 60% by mass, and the mixture was subjected to an oxidative decomposition treatment under the conditions of 160°C, 14 atmospheres, and 20 minutes. Subsequently, the resultant was subjected to an oxidative etching treatment under the conditions of 130°C, 13 atmospheres, and 1 hour. Through the oxidative etching treatment, particles in which graphite-based carbon had been partially removed from the BD were obtained. These particles were heated to reflux and neutralized using ammonia under the conditions of 210°C, 20 atmospheres, and 20 minutes, and then the particles were allowed to settle down naturally. Subsequently, the particles were washed with a 35 mass% nitric acid by decantation. Furthermore, the particles were washed with water three times by decantation, subsequently dehydrated by centrifugation, and heated to dry at 120°C. Thereby, diamond fine particles were obtained.

These diamond fine particles were further dispersed in water, and decantation was performed. By repeating this operation, the diamond fine particles were separated into diamond fine particles A having a relatively smaller particle size, and diamond fine particles B having a relatively larger particle size in the sediment portion. The median diameters according to a dynamic light scattering method and the refractive indices of the diamond fine particles A and the diamond fine particles B were as follows.
(1) Diamond fine particles A: median diameter 0.41 µm (dynamic light scattering method), refractive index 2.4
(2) Diamond fine particles B: median diameter 2.5 µm (dynamic light scattering method), refractive index 2.4

According to the present Example, the refractive index of fine particles was measured by the following method. First, a powder of fine particles such as nanodiamond particles and a polymethyl methacrylate resin are weighed so as to obtain predetermined volume fractions, and the components are mixed with N-methylpyrrolidone. Thereby, the fine particles are dispersed, the resin is dissolved, and a coating material for forming a coating film is produced. Subsequently, this coating material is applied on a substrate using a spin coater, and a coating film is formed (coating amount: 2 µL, coating film forming conditions: 50°C for 10 minutes). Subsequently, the refractive index of the coating film is measured using a thin film refractive index measuring apparatus. A similar operation is carried out by varying the volume fraction of the powder of the fine particles to various kinds, and the refractive index values thus obtained are plotted into a graph in which the horizontal axis represents the volume fraction of the powder of fine particles and the vertical axis represents the refractive index of the coating film. The various measurement points thus plotted are linearly approximated, and this straight line is extrapolated to a point where the volume fraction of the powder of fine particles becomes 100%. The refractive index value at that point (not the difference between the refractive index at the point where the volume fraction is 100% and the refractive index at the point where the volume fraction is 0%) is designated as the refractive index of the fine particles.

### (Production Example 1)

### [Production of aqueous dispersion]

100 parts by mass of EVAFANOL HA-170 (manufactured by Nicca Chemical Co., Ltd., trade name, non-volatile components: 36.5% by mass), which is a carbonate-based aqueous urethane resin dispersion liquid as a dispersion liquid, was introduced into a 200-ml stainless steel pot. To this, 5 parts by mass of diamond fine particles A were added, and the mixture was treated for 15 minutes at 5,000 rpm using a homomixer (trade name: T.K HOMODisper (Model 2.5), manufactured by Primix Corp.). Subsequently, filtration was performed using #2000 fibers, and a uniform aqueous dispersion 1 was obtained. Anything that could be considered as aggregates was hardly found on the fibers. The aqueous dispersion 1 thus obtained was measured using ZETASIZER NANO ZS (manufactured by Malvern Instruments, Ltd., trade name) at a measurement temperature of 25°C, and the median diameter was 0.164 µm. Meanwhile, the measurement of the median diameter was performed within 5 minutes after the production of the aqueous dispersion 1.

### [Evaluation of dispersion stability]

The aqueous dispersion 1 thus obtained was transferred into a 200-ml graduated cylinder and was left to stand for 3 hours; however, a precipitate could be hardly seen.

### (Production Example 2)

A uniform aqueous dispersion 2 was obtained in the same manner as in Production Example 1, except that EVAFANOL HA-15 (Nicca Chemical Co., Ltd., trade name, non-volatile components: 30.4% by mass), which is a carbonate-based aqueous urethane resin dispersion liquid, was used as a dispersion liquid. Anything that could be considered as aggregates was hardly found on the fibers. The aqueous dispersion 2 was measured in the same manner as in Production Example 1, and the median diameter was 0.178 µm. Next, the aqueous dispersion 2 was transferred into a 200-ml graduated cylinder and was left to stand for 3 hours; however, a precipitate was hardly observed.

### (Production Example 3)

Diamond fine particles A were subjected to a microparticulation dispersion treatment using a bead mill. Dispersion by means of a bead mill was performed using EASY NANO RMB (trade name) manufactured by Imex Co., Ltd. Specifically, 100 parts by mass of NEOSTECKER 1200 (manufactured by Nicca Chemical Co., Ltd., trade name, non-volatile components: 36.7% by mass), which is an ester-based aqueous acrylic urethane resin dispersion liquid, was added to a 0.2-L vessel filled with 50 ml of zirconia beads having a diameter of 0.1 mm. Next, while a rotor was rotated at a circumferential speed of 5 m/s, 2 parts by mass of the diamond fine particles A were added to the vessel, and the particles were treated for one hour. Subsequently, filtration was performed using #2000 fibers, and a uniform aqueous dispersion 3 was obtained. Anything that could be considered as aggregates was hardly found on the fibers. The aqueous dispersion 3 was measured in the same manner as in Production Example 1, and the median diameter was 0.058 µm. Next, the aqueous dispersion 3 was transferred into a 200-ml graduated cylinder and was left to stand for 3 hours; however, a precipitate was hardly seen.

### (Production Example 4)

A uniform aqueous dispersion 4 was obtained in the same manner as in Production Example 3, except that EVAFANOL HA-170 (manufactured by Nicca Chemical Co., Ltd., trade name, non-volatile components: 36.5% by mass), which is a carbonate-based aqueous urethane resin dispersion liquid, was used as the dispersion liquid. Anything that could be considered as aggregates was hardly found on the fibers. The aqueous dispersion 4 was measured in the same manner as in Production Example 1, and the median diameter was 0.041 µm. Next, the aqueous dispersion 4 was transferred into a 200-ml graduated cylinder and was left to stand for 3 hours; however, a precipitate was hardly observed.

### (Production Example 5)

A uniform aqueous dispersion 5 was obtained in the same manner as in Production Example 1, except that diamond fine particles B were used instead of the diamond fine particles A. Anything that could be considered as aggregates was hardly found on the fibers. The aqueous dispersion 5 was measured in the same manner as in Production Example 1, and the median diameter was 0.563 µm. Next, the aqueous dispersion 5 was transferred into a 200-ml graduated cylinder and was left to stand for 3 hours; however, a precipitate was hardly observed.

### (Production Example 6)

A uniform aqueous dispersion 6 was obtained in the same manner as in Production Example 1, except that 3 parts by mass of commercially available zirconium oxide (ZrO₂) fine particles (manufactured by Kanto Denka Kogyo Co., Ltd., median diameter: 12 nm, refractive index: 2.4) were used instead of the diamond fine particles A. Anything that could be considered as aggregates was hardly found on the fibers. The aqueous dispersion 6 was measured in the same manner as in Production Example 1, and the median diameter was 0.037 µm. Next, the aqueous dispersion 6 was transferred into a 200-ml graduated cylinder and was left to stand for 3 hours; however, a precipitate was hardly observed.

### (Production Example 7)

A uniform aqueous dispersion 7 was obtained in the same manner as in Production Example 1, except that 10 parts by mass of the diamond fine particles A were used, and VONCOAT HY364 (manufactured by Dainippon Ink & Chemicals, Inc., trade name, non-volatile components: 45.2% by mass), which is an aqueous acrylic-urethane composite resin dispersion liquid, was used. Anything that could be considered as aggregates was hardly found on the fibers. The aqueous dispersion 7 was measured in the same manner as in Production Example 1, and the median diameter was 0.172 µm. Next, the aqueous dispersion 7 was transferred into a 200-ml graduated cylinder and was left to stand for 3 hours; however, a precipitate was hardly observed.

### (Production Example 8)

A uniform aqueous dispersion 8 was obtained in the same manner as in Production Example 1, except that 3 parts by mass of commercially available barium titanate (BaTiO₃) fine particles (manufactured by Kanto Denka Kogyo Co., Ltd., median diameter: 25 nm, refractive index: 2.4) were used instead of the diamond fine particles A. Anything that could be considered as aggregates was hardly found on the fibers. The aqueous dispersion 8 was measured in the same manner as in Production Example 1, and the median diameter was 0.054 µm. Next, the aqueous dispersion 8 was transferred into a 200-ml graduated cylinder and was left to stand for 3 hours; however, a precipitate was hardly observed.

### (Production Example 9)

A uniform aqueous dispersion 9 was obtained in the same manner as in Production Example 1, except that the amount of use of the diamond fine particles A was adjusted to 10 parts by mass, and NEOCRYL XK-12 (manufactured by Dainippon Ink & Chemicals, Inc., trade name, non-volatile components: 45.4%), which is an aqueous acrylic resin dispersion liquid, was used as the dispersion liquid. Anything that could be considered as aggregates was hardly found on the fibers. The aqueous dispersion 9 was measured in the same manner as in Production Example 1, and the median diameter was 0.193 µm. Next, the aqueous dispersion 9 was transferred into a 200-ml graduated cylinder and was left to stand for 3 hours; however, a precipitate was hardly observed.

### (Production Example 10)

A uniform aqueous dispersion 10 was obtained in the same manner as in Production Example 1, except that diamond fine particles B were used instead of the diamond fine particles A, and the treatment time for the treatment with a homomixer was changed to 10 minutes. Almost no aggregates were collected from the fibers. The aqueous dispersion 10 was measured in the same manner as in Production Example 1, and the median diameter was 1.3 µm. Next, the aqueous dispersion 10 was transferred into a 200-ml graduated cylinder and was left to stand for 3 hours, and a precipitate was recognized.

### (Production Example 11)

An aqueous dispersion 11 was produced in the same manner as in Production Example 1, except that NEOSTECKER C-33 (manufactured by Nicca Chemical Co., Ltd., trade name, non-volatile components: 36.5% by mass), which is a cationic aqueous urethane resin dispersion liquid, was used as the dispersion liquid, and the treatment time for the treatment with a homomixer was changed to 10 minutes. 1.7 g of aggregates were collected on the fibers. The aqueous dispersion 11 was measured in the same manner as in Production Example 1, and the median diameter was 12 µm. Next, the aqueous dispersion 11 was transferred into a 200-ml graduated cylinder and was left to stand for 3 hours, and the aqueous dispersion was separated into two layers.

### (Production Example 12)

An aqueous solution containing 8% by mass of polyvinyl alcohol was obtained by heating and mixing polyvinyl alcohol (trade name: PVA117, manufactured by Kuraray Co., Ltd.) and distilled water. A uniform aqueous dispersion 12 was obtained in the same manner as in Production Example 1, except that the amount of use of the diamond fine particles A was adjusted to 3 parts by mass, and an aqueous solution containing 8% by mass of polyvinyl alcohol was used as the dispersion liquid. Anything that could be considered as aggregates was hardly found on the fibers. The aqueous dispersion 12 was measured in the same manner as in Production Example 1, and the median diameter was 0.254 µm.

**[Table 1]**

| | Dispersion liquid | | High-refractive index fine particles | Median diameter (µm) | Evaluation |
|---|---|---|---|---|---|
| | Type | Ionicity of polymer | Type | | Dispersion stability |
| Production Example 1 | EVAFANOL HA-170 | Anionic | Diamond fine particles A | 0.164 | A |
| Production Example 2 | EVAFANOL HA-15 | Anionic | Diamond fine particles A | 0.178 | A |
| Production Example 3 | NEOSTECKER 1200 | Anionic | Diamond fine particles A | 0.058 | A |
| Production Example 4 | EVAFANOL HA-170 | Anionic | Diamond fine particles A | 0.041 | A |
| Production Example 5 | EVAFANOL HA-170 | Anionic | Diamond fine particles B | 0.563 | A |
| Production Example 6 | EVAFANOL HA-170 | Anionic | Zirconium oxide fme particles | 0.037 | A |
| Production Example 7 | VONCOAT HY364 | Anionic | Diamond fine particles A | 0.172 | A |
| Production Example 8 | EVAFANOL HA-170 | Anionic | Barium titanate fine particles | 0.054 | A |
| Production Example 9 | NEOCRYL XK-12 | Anionic | Diamond fine particles A | 0.193 | A |
| Production Example 10 | EVAFANOL HA-170 | Anionic | Diamond fine particles B | 1.3 | B |
| Production Example 11 | NEOSTECKER C-33 | Cationic | Diamond fine particles A | 12 | C |
| Production Example 12 | PVA117 | - | Diamond fine particles A | 0.254 | - |

Regarding the dispersion stability in Table 1, the case in which the dispersion stability was satisfactory in the evaluation for dispersion stability was rated as A; the case in which a sediment was observed was rated as B; and the case in which the aqueous dispersion was separated into two layers was rated as C.

### (Example 1)

### [Production of coating solution for transmission type screen]

35 parts by mass of the aqueous dispersion 1 obtained in Production Example 1 was introduced into a beaker, and while the content was stirred, 55 parts by mass of ion-exchanged water was slowly added thereto so as to dilute the aqueous dispersion 1. Furthermore, 10 parts by mass of isopropyl alcohol was added dropwise to the mixture for 5 minutes by using a dropping funnel. After completion of the dropwise addition, the mixture was continuously stirred and mixed for 30 minutes, and the mixture was treated with ultrasonic waves for 10 minutes. A coating solution for a transmission type screen was produced by the operation described above. The coating solution thus obtained was measured using ZETASIZER NANO ZS (manufactured by Malvern Instruments, Ltd.) at a measurement temperature of 25°C, and the median diameter was 0.158 µm. Meanwhile, the measurement of the coating solution was carried out within 5 minutes after the production of the coating solution.

### [Production of transmission type screen]

A polyester film (trade name: LUMIRROR U-34, manufactured by Toray Industries, Inc., thickness: 100 µm) was prepared as a substrate. The coating solution obtained by the operation described above was applied on the substrate by using a bar coater. Next, the coating solution was dried for 3 minutes using a hot air dryer at 100°C, and a transmission type screen was obtained. The thickness (film thickness) of the coating film (transparent thin film layer) in the transmission type screen thus obtained was 5.0 µm. In the present Example, the thickness of the coating film was measured by capturing an image of a cross-section of the coating film on the substrate using a scanning electron microscope (trade name: S-5400, manufactured by Hitachi High-Technologies Corp.).

### (Example 2)

An operation similar to that of Example 1 was carried out, except that the aqueous dispersion 2 was used, and thus a coating solution for a transmission type screen was produced. The coating solution was measured in the same manner as in Example 1, and the median diameter was 0.181 µm. Next, a transmission type screen was produced in the same manner as in Example 1, except that the coating solution thus obtained was used. The thickness of the coating film was 4.5 µm.

### (Example 3)

A coating solution for a transmission type screen was produced in the same manner as in Example 1, except that 2 parts by mass of NK ASSIST CI (manufactured by Nicca Chemical Co., Ltd., trade name), which is a carbodiimide-based water-based crosslinking agent, was added at the time of adding ion-exchanged water, and the amount of use of ion-exchanged water was changed to 40 parts by mass. The coating solution was measured in the same manner as in Example 1, and the median diameter was 0.187 µm. Next, a transmission type screen was produced in the same manner as in Example 1, except that the coating solution thus obtained was used. The thickness of the coating film was 5.2 µm.

### (Example 4)

A coating solution for a transmission type screen was produced by performing an operation similar to that of Example 1, except that the aqueous dispersion 3 was used. The coating solution for a transmission type screen thus produced was measured using ZETASIZER NANO ZS (manufactured by Malvern Instruments, Ltd., trade name) at a measurement temperature of 25°C, and the median diameter was 0.061 µm. Next, a transmission type screen was produced in the same manner as in Example 1, except that the coating solution thus obtained was used. The thickness of the coating film was 4.8 µm.

### (Example 5)

A coating solution for a transmission type screen was produced by performing an operation similar to that of Example 1, except that the aqueous dispersion 4 was used. The coating solution was measured in the same manner as in Example 1, and the median diameter was 0.039 µm. Next, a transmission type screen was produced in the same manner as in Example 1, except that the coating solution thus obtained was used. The thickness of the coating film was 4.6 µm.

### (Example 6)

A coating solution for a transmission type screen was produced by performing an operation similar to that of Example 1, except that the aqueous dispersion 5 was used. The coating solution was measured in the same manner as in Example 1, and the median diameter was 0.476 µm. Next, a transmission type screen was produced in the same manner as in Example 1, except that the coating solution thus obtained was used. The thickness of the coating film was 5.3 µm.

### (Example 7)

A coating solution for a transmission type screen was produced by performing an operation similar to that of Example 1, except that the aqueous dispersion 6 was used. The coating solution was measured in the same manner as in Example 1, and the median diameter was 0.053 µm. Next, a transmission type screen was produced in the same manner as in Example 1, except that the coating solution thus obtained was used. The thickness of the coating film was 4.7 µm.

### (Example 8)

A coating solution for a transmission type screen was produced by performing an operation similar to that of Example 1, except that the aqueous dispersion 7 was used. The coating solution was measured in the same manner as in Example 1, and the median diameter was 0.162 µm. Next, a transmission type screen was produced in the same manner as in Example 1, except that the coating solution thus obtained was used. The thickness of the coating film was 5.1 µm.

### (Example 9)

A coating solution for a transmission type screen was produced by performing an operation similar to that of Example 1, except that the aqueous dispersion 8 was used. The coating solution was measured in the same manner as in Example 1, and the median diameter was 0.066 µm. Next, a transmission type screen was produced in the same manner as in Example 1, except that the coating solution thus obtained was used. The thickness of the coating film was 6.7 µm.

### (Example 10)

A coating solution for a transmission type screen was produced by performing an operation similar to that of Example 1, except that the aqueous dispersion 9 was used. The coating solution was measured in the same manner as in Example 1, and the median diameter was 0.186 µm. Next, a transmission type screen was produced in the same manner as in Example 1, except that the coating solution thus obtained was used. The thickness of the coating film was 5.4 µm.

### (Example 11)

A transmission type screen was produced in the same manner as in Example 1, except that the coating solution was spray-coated on a polyester film (trade name: LUMIRROR U-34, manufactured by Toray Industries, Inc., thickness: 100 µm) as a substrate, using a micro spray gun (trade name: NEO-77 micro spray gun + ST150 cup set, manufactured by Ekoh Industries Corp.). The thickness of the coating film was 5.2 µm.

### (Comparative Example 1)

A coating solution for a transmission type screen was produced by performing an operation similar to that of Example 1, except that the aqueous dispersion 10 was used. The coating solution was measured in the same manner as in Example 1, and the median diameter was 1.20 µm. Next, a transmission type screen was produced in the same manner as in Example 1, except that the coating solution thus obtained was used.

### (Comparative Example 2)

A coating solution for a transmission type screen was produced by performing an operation similar to that of Example 1, except that the aqueous dispersion 12 was used. The coating solution was measured in the same manner as in Example 1, and the median diameter was 0.247 µm*. Next, a transmission type screen was produced in the same manner as in Example 1, except that the coating solution thus obtained was used. The thickness of the coating film was 4.9 µm.

### [Evaluation of transmission type screen]

The product quality of the transmission type screens obtained in present Examples 1 to 10 and Comparative Examples 1 and 2 was evaluated by the method described below. The results are presented in Table 2.

### <Evaluation of external appearance>

The coating film surface was observed by visual inspection, and a coating film having no defects in the external appearance, such as film unevenness, cloudiness, and cracks, was rated as A; while a coating film having defects in the external appearance, such as film unevenness, cloudiness, and cracks, was rated as B.

### <Evaluation of durability>

### [Adhesiveness]

A pressure-sensitive adhesive Cellophane tape was stuck to the coating film surface and was rapidly peeled off at an angle of 60°, and then an observation was made of the external appearance of a coating film. Thus, the external appearance was evaluated according to the following criteria. Meanwhile, the adhesiveness is most satisfactory in the case of A.
A: 95% or more of the coating film remained on the film side.
B: 80% or more of the coating film remained on the film side.
C: 50% or more and less than 80% of the coating film remained on the film side.
D: Only less than 50% of the coating film remained on the film side.

### [Water resistance]

A transmission type screen thus produced was immersed in ion-exchanged water at 20°C for one week, and then an observation was made of the external appearance of the transparent thin film layer. Thus, transparency was evaluated according to the following criteria. Meanwhile, water resistance is most satisfactory in the case of A.
A: Whitening is not seen at all.
B: Very slight whitening is seen.
C: Slight whitening occurred.
D: Whitening occurred.

### <Evaluation of transparent visibility>

### [Fogging value (haze) and total transmittance]

The fogging value (haze) and the total transmittance of a transmission type screen were measured using a haze meter (manufactured by Nippon Denshoku Industries Co., Ltd., NDH2000), according to the specification of JIS-R3212 (version of year 2015).

### [Transmissiblity]

An image was projected using a projector on a transmission type screen installed such that the film surface would be perpendicular to the light rays coming from the projector. The background on the projector side (projector direction) was observed from the side opposite to the projector, and transmissibility was evaluated according to the following criteria. Meanwhile, transmissibility is most satisfactory in the case of score 1.
1: The background in the projector direction is very clearly seen.
2: The background in the projector direction is clearly seen.
3: The background in the projector direction becomes slightly whitish; however, the background is sufficiently seen.
4: The background in the projector direction becomes whitish; however, the background is slightly seen.
5: The background in the projector direction becomes whitish and is almost not seen.
6: The background in the projector direction is not seen at all.

### <Evaluation of light scattering reflectivity>

### [Light scattering properties]

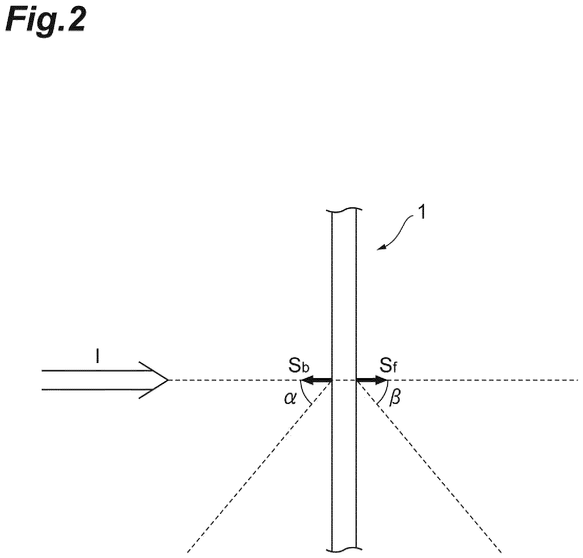

Light at 550 nm was made perpendicularly incident to a transmission type screen installed such that the film surface would be perpendicular to the light rays coming from a projector, and the position of the detector was slowly changed from the position of perpendicular transmission. The transmittance of light having a wavelength of 550 nm (forward scattered light Sf) at the time when the gradient of the detector with respect to the perpendicular incidence surface (detection angle, β in FIG. 2) became 10° was measured. For the measuring apparatus, a spectrophotometer ARSN-733 manufactured by JEOL, Ltd. was used. It was evaluated such that a higher transmittance implied more satisfactory light scattering properties.

### [Image sharpness]

An image was projected using a projector on a transmission type screen such that the film surface would be perpendicular to the light rays coming from the projector. The appearance of the image thus projected was observed respectively on the projector side and the side opposite to the projector in a horizontal direction with respect to the light rays coming from the projector, and the sharpness of the image was evaluated according to the following criteria. Meanwhile, when the evaluation score is 1, it is implied that the sharpness of the image is most satisfactory.
1: Color development of the projected image is very clear, and the outlines are very clearly seen.
2: Color development of the projected image is clear, and the outlines are clearly seen.
3: Color development of the projected image is satisfactory, and the outlines are sufficiently seen.
4: The projected image is generally whitish, and the outlines are thin.
5: The color tones of the projected image are hardly distinguishable, and the outlines are hardly recognizable.
6: The projected image is invisible.

### [Viewing angle (80°) visibility]

An image was projected using a projector on a transmission type screen installed such that the film surface would be perpendicular to the light rays coming from the projector. The appearance of the projected image was observed from a direction at a gradient of 80° with respect to the light rays coming from the projector (in FIG. 2, direction in which α and β form an angle of 80°) respectively on the projector side and the side opposite to the projector, and the viewing angle (80°) visibility was evaluated according to the following criteria.
1: Color development of the projected image is clear even from the direction at a gradient of 80°, and the outlines are clearly seen.
2: Color development of the projected image is satisfactory even from the direction at a gradient of 80°, and the outlines are sufficiently seen.
3: The image is invisible from the direction at a gradient of 80°.

**[Table 2]**

| | Coating solution | | Transparent thin film layer | Evaluation | | | | | | | | |
|---|---|---|---|---|---|---|---|---|---|---|---|---|
| | Incorporated component | Median diameter (µm) | Film thickness (µm) | External appearance | Durability | | Transparent visibility | | | Light scattering reflectivity | | |
| | | | | | Adhesiveness | Water resistance | Fogging value (%) | Total transmittance (%) | Transmissibility | Light scattering properties (%) | Image sharpness | Viewing angle (80°) visibility |
| Example 1 | Aqueous dispersion 1 | 0.158 | 5.0 | A | A | B | 6.6 | 89.7 | 2 | 0.12 | 1 | 1 |
| Example 2 | Aqueous dispersion 2 | 0.181 | 4.5 | A | C | C | 7.1 | 88.4 | 2 | 0.16 | 1 | 1 |
| Example 3 | Aqueous dispersion 1 | 0.187 | 5.2 | A | A | A | 6.9 | 88.6 | 2 | 0.14 | 1 | 1 |
| Example 4 | Aqueous dispersion 3 | 0.061 | 4.8 | A | A | B | 2.4 | 90.2 | 1 | 0.08 | 3 | 3 |
| Example 5 | Aqueous dispersion 4 | 0.039 | 4.6 | A | A | B | 1.4 | 90.1 | 1 | 0.11 | 3 | 3 |
| Example 6 | Aqueous dispersion 5 | 0.476 | 5.3 | A | A | B | 17.2 | 80.5 | 3 | 0.31 | 2 | 2 |
| Example 7 | Aqueous dispersion 6 | 0.053 | 4.7 | A | A | B | 1.5 | 90.7 | 1 | 0.06 | 3 | 3 |
| Example 8 | Aqueous dispersion 7 | 0.162 | 5.1 | A | B | C | 6.8 | 89.1 | 2 | 0.15 | 1 | 2 |
| Example 9 | Aqueous dispersion 8 | 0.066 | 6.7 | A | A | B | 1.2 | 90.3 | 1 | 0.09 | 3 | 3 |
| Example 10 | Aqueous dispersion 9 | 0.186 | 5.4 | A | B | C | 6.9 | 90.1 | 2 | 0.14 | 1 | 2 |
| Example 11 | Aqueous dispersion 1 | 0.158 | 5.2 | A | A | B | 6.8 | 88.7 | 2 | 0.13 | 1 | 1 |
| Comparative Example 1 | Aqueous dispersion 10 | 1.20 | - | B | A | B | - | - | 5 | - | 2 | 2 |
| Comparative Example 2 | Aqueous dispersion 12 | 0.247 | 4.9 | A | D | D | 8.2 | 88.6 | 2 | 0.18 | 2 | 2 |

### Reference Signs List

1: Transmission type screen
10: Fine particles
11, 11a, 11b: Substrate
12: Transparent thin film layer
I: Incident light
Sf: Forward scattered light
Sb: Backward scattered light

## Claims

1. An aqueous dispersion comprising fine particles having a refractive index of 2.0 or higher; and an anionic polymer,
the aqueous dispersion having a median diameter of 0.01 to 1.0 µm as measured by a dynamic light scattering method.

2. The aqueous dispersion according to claim 1, wherein the fine particles contain at least one component selected from the group consisting of diamond, a diamond derivative, barium titanate, zirconium oxide, and titanium oxide.

3. The aqueous dispersion according to claim 1 or 2, wherein the anionic polymer has at least one anionic group selected from the group consisting of a carboxy group, a carboxylate group, a sulfo group, and a sulfonate group.

4. The aqueous dispersion according to any one of claims 1 to 3, wherein the anionic polymer includes at least one resin selected from the group consisting of a polyurethane resin, an acrylic resin, and an acrylic urethane resin, all of the resins being water-soluble or water-dispersible.

5. The aqueous dispersion according to claim 4, wherein the polyurethane resin and the acrylic urethane resin have at least one structural unit derived from a polyol component selected from the group consisting of a polyester polyol and a polycarbonate polyol.

6. A coating solution comprising fine particles having a refractive index of 2.0 or higher; and an anionic polymer,
the coating solution having a median diameter of 0.01 to 1.0 µm as measured by a dynamic light scattering method.

7. The coating solution according to claim 6, wherein the fine particles contain at least one component selected from the group consisting of diamond, a diamond derivative, barium titanate, zirconium oxide, and titanium oxide.

8. The coating solution according to claim 6 or 7, wherein the anionic polymer has at least one anionic group selected from the group consisting of a carboxy group, a carboxylate group, a sulfo group, and a sulfonate group.

9. The coating solution according to any one of claims 6 to 8, wherein the anionic polymer includes at least one resin selected from the group consisting of a polyurethane resin, an acrylic resin, and an acrylic urethane resin, all the resins being water-soluble or water-dispersible.

10. The coating solution according to claim 9, wherein the polyurethane resin and the acrylic urethane resin have at least one structural unit derived from a polyol component selected from the group consisting of a polyester polyol and a polycarbonate polyol.

11. The coating solution according to any one of claims 6 to 10, wherein the coating solution is intended for use in a transmission type screen.

12. A method for producing a transmission type screen, the method comprising a step of applying the coating solution according to any one of claims 6 to 10 on a substrate.

13. The method for producing a transmission type screen according to claim 12, wherein the transmission type screen is intended for use in a head-up display.
